# EUROPÄISCHE PATENTSCHRIFT

(11) **EP 1 246 579 B1**
(45) Veröffentlichungstag und Bekanntmachung des Hinweises auf die Patenterteilung: **14.01.2004**
(21) Anmeldenummer: 00987234.2
(22) Anmeldetag: 11.11.2000
(51) Int. Cl.: A61C 1/00, A61C 17/02

(54) **FLÜSSIGKEITSBEHÄLTER**
LIQUID CONTAINER
RESERVOIR DE LIQUIDE

(30) Priorität: 03.12.1999 DE 29921192 U; 02.02.2000 DE 10004535
(43) Veröffentlichungstag der Anmeldung: 09.10.2002
(73) Patentinhaber: CONAIR CORPORATION, Stamford Connecticut 06904 (US)
(72) Erfinder: SCHÜTZ, Alfred, CH-3052 Zollikofen (CH)
(74) Vertreter: Schlagwein, Udo, Dipl.-Ing.
(86) Internationale Anmeldenummer: PCT/EP2000/011173
(87) Internationale Veröffentlichungsnummer: WO 2001/039684

(56) Entgegenhaltungen:
- US-A- 4 302 186
- US-A- 4 830 210
- US-A- 5 060 825

## Beschreibung

Die Erfindung betrifft einen Flüssigkeitsbehälter für eine Munddusche, welcher in seinem Boden ein beim Aufsetzen auf die Munddusche öffnendes Bodenventil hat.

Ein Flüssigkeitsbehälter der vorstehenden Art ist beispielsweise in der US 4,302,186 beschrieben. Der Flüssigkeitsbehälter ermöglicht es, separat von der Munddusche mit Wasser gefüllt und im gefüllten Zustand zur Munddusche transportiert zu werden und gibt zwangsläufig eine verbindung zur Munddusche frei, wenn man ihn auf die Munddusche aufsetzt.

Oftmals besteht der Wunsch, im Wasserbehälter einer Munddusche statt klares Wasser ein spezielles Mundwasser zu verwenden oder das eingefüllte Wasser mit Mundwasser zu versetzen. Da der Flüssigkeitsbehälter jedoch relativ großvolumig ist, führt es zu unerwünscht hohen Kosten, wenn man bei Benutzung der Munddusche von Anfang an statt mit klarem Wasser mit einem Mundwasser oder mit durch Mundwasser versetztem Wasser arbeitet. Deshalb wechselt man oftmals kurz vor Beendigung der Benutzung der Munddusche die im Flüssigkeitsbehälter eingefüllte Flüssigkeit, was natürlich lästig ist.

Der Erfindung liegt das Problem zugrunde, einen Flüssigkeitsbehälter der eingangs genannten Art so auszubilden, dass man auf möglichst bequeme Weise zwischen zumindest zwei Flüssigkeiten wechseln kann.

Dieses Problem wird erfindungsgemäß dadurch gelöst, dass der Flüssigkeitsbehälter zwei separate Flüssigkeitskammern mit jeweils einem zu dem Bodenventil führenden Flüssigkeitsauslass hat, welcher an einem manuell betätigbaren, wahlweise den einen oder anderen Flüssigkeitsauslass freigebenden Umschaltventil angeschlossen ist.

Durch diese Gestaltung des Flüssigkeitsbehälters kann man während der Benutzung der Munddusche diese wahlweise an die eine oder andere Flüssigkeitskammer anschließen. Dadurch wird es möglich, erst gegen Ende des Reinigungsvorganges beispielsweise mit einem Mundwasser zu sprühen, ohne dass man hierzu die Flüssigkeit im Flüssigkeitsbehälter wechseln muss. Dank der Erfindung kann man die beiden Flüssigkeiten schon vor Benutzung der Munddusche in die beiden Flüssigkeitskammern einfüllen. Weiterhin kann man durch die separate Anordnung von zwei Flüssigkeitskammern dafür sorgen, dass vom relativ teuren und nur zum Schluss des Reinigungsvorganges zu benutzenden Mundwassers nur die tatsächlich benötigte, kleine Menge eingefüllt wird.

Das Umschaltventil ist besonders bequem zu betätigen und gibt stets entweder den einen oder anderen Flüssigkeitsauslass frei, wenn gemäß einer vorteilhaften weiterbildung der Erfindung das Umschaltventil durch eine bistabile Schnappfeder in seine jeweilige Schaltstellung vorgespannt ist.

Konstruktiv besonders einfach ist der Flüssigkeitsbehälter gestaltet, wenn das Bodenventil in einer unter dem Boden des Flüssigkeitsbehälters vorgesehenen Ventilkammer angeordnet ist und wenn das Umschaltventil zwischen einem Schließglied des Bodenventils und den Flüssigkeitsauslässen als gegen den Boden des Flüssigkeitsbehälters anliegende, manuell verdrehbare Ventilscheibe ausgebildet ist, welche einen wahlweise mit dem einen oder anderen Flüssigkeitsauslass in Überdeckung zu bringenden Durchlass aufweist.

Die Mittel zur Betätigung der Ventilscheibe können sehr einfach ausgebildet sein, wenn die Ventilscheibe mit einer koaxialen Verzahnung versehen ist und wenn zum Verdrehen der Ventilscheibe eine axial verschiebliche Zahnstange vorgesehen ist.

Die gewünschte Schnappfunktion des Umschaltventils lässt sich dadurch leicht erreichen, dass die Zahnstange durch die Schnappfeder in zwei Endstellungen vorgespannt ist.

Die Handhabung des Flüssigkeitsbehälters ist besonders einfach, wenn zum Betätigen der Zahnstange ein um eine Schwenkachse beweglicher, zweiarmiger Kipphebel vorgesehen ist, welcher mit einem Ende an der Zahnstange angreift und gegen dessen Hebelarme jeweils ein Tastschalter anliegt. Eine solche Ausführungsform ermöglicht es, mit derselben Hand, mit der man den Flüssigkeitsbehälter trägt, während des Tragens die Tastschalter zu betätigen und dadurch die gewünschte Flüssigkeitskammer freizugeben.

Beim Umschalten des Umschaltventils verbleibt dieses so lange in der jeweiligen Endstellung, bis die Totpunktstellung der Schnappfeder überwunden ist, wenn die Zahnstange um ein solches Maß verschieblich mit dem Kipphebel gekoppelt ist, dass beim Umschalten von der einen in die andere Stellung eine Mitnahme der Zahnstange erst nach Überwindung der Totpunktstellung der Schnappfeder erfolgt. Durch diese Gestaltung bleibt die jeweilige Schaltstellung des Umschaltventils zunächst vollständig erhalten. Erst nach Überwindung der Totpunktstellung beginnt der Schaltvorgang des Umschaltventils, so dass dieser sehr rasch erfolgt und der Zeitraum kurz ist, in welchem sich das Umschaltventil in einer Zwischenstellung befindet.

Das gewünschte Spiel zwischen der Zahnstange und dem Kipphebel lässt sich auf einfache Weise dadurch verwirklichen, dass die Schnappfeder sich auf einem Bolzen abstützt, welcher einerseits in einer Gabel eines Hebelarmes des Kipphebels verschieblich geführt, andererseits in einer Ausnehmung der Zahnstange abgestützt ist, und dass der Bolzen zum Verschieben der Zahnstange gegen jeweils eine von zwei Endflächen der Ausnehmung beweglich ist.

Die Betätigung der Ventilscheibe ist auch statt durch zwei Tastschalter mittels eines Wippschalters möglich, wenn gemäß einer anderen Weiterbildung der Erfindung zum Verdrehen der Ventilscheibe an der Ventilscheibe eine Schubstange angelenkt ist, welche mit ihrem anderen Ende mit einem Hebelarm eines Wippschalters Verbindung hat.

Bei einer solchen Ausführungsform lässt sich die gewünschte Schnappfunktion mit einfachen Mitteln dadurch erreichen, dass die Schnappfeder als Teleskopstange ausgebildet ist und an einer Abstützung des Flüssigkeitsbehälters und einer Gleitfläche des Wippschalters angreift.

Die Erfindung lässt verschiedene Ausführungsformen zu. Mehrere davon sind in der Zeichnung dargestellt und werden nachfolgend beschrieben. Diese zeigt in
- Fig.1: einen senkrechten Schnitt durch einen Flüssigkeitsbehälter nach der Erfindung,
- Fig.2: einen horizontalen Schnitt durch den Flüssigkeitsbehälter,
- Fig.3: eine Prinzipskizze der Betätigung eines Umschaltventils des Flüssigkeitsbehälters,
- Fig.4: eine im Maßstab vergrößerte Schnittdarstellung des Bereiches des Umschaltventils des Flüssigkeitsbehälters,
- Fig.5: eine Prinzipskizze einer zweiten Ausführungsform der Betätigung des Umschaltventils,
- Fig.6: einen horizontalen Schnitt durch den Flüssigkeitsbehälter mit einer geänderten Betätigung des Umschaltventils,
- Fig.7: einen Wippschalter des Flüssigkeitsbehälters in einer ersten Schaltposition,
- Fig.8: den Wippschalter nach Figur 7 in einer zweiten Schaltposition.

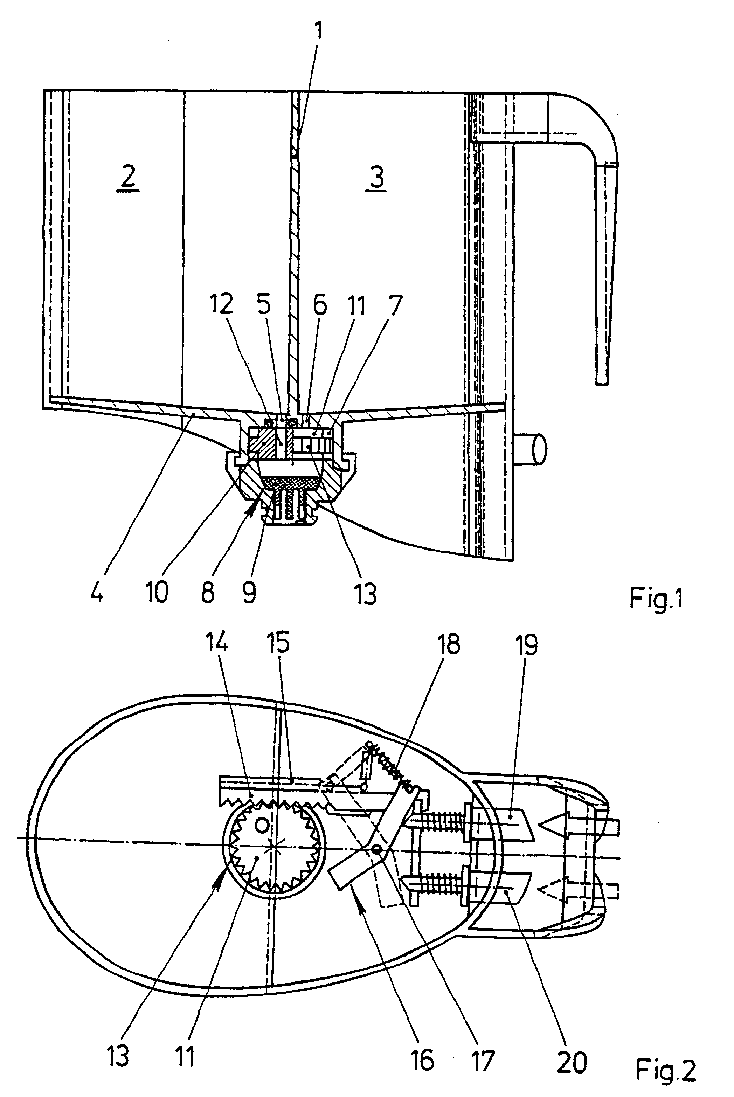

Der in Figur 1 als Ganzes dargestellte Flüssigkeitsbehälter hat eine Trennwand 1, die ihn in zwei voneinander getrennte Flüssigkeitskammern 2, 3 unterteilt. Diese Flüssigkeitskammern 2, 3 sind nach unten hin durch einen zur Mitte des Flüssigkeitsbehälters hin abfallenden Boden 4 begrenzt, der jeweils unmittelbar vor der Trennwand 1 einen Flüssigkeitsauslass 5, 6 hat. Die Flüssigkeitsauslässe 5, 6 münden in eine gemeinsame, am Boden 4 des Flüssigkeitsbehälters angeformte Ventilkammer 7, in der ein Bodenventil 8 angeordnet ist. Dieses hat ein Schließglied 9, welches beim Aufsetzen des Flüssigkeitsbehälters auf eine Munddusche auf übliche Weise aufgestoßen wird. Oberhalb des Bodenventils 8 ist in der Ventilkammer 7 ein Umschaltventil 10 angeordnet, das es ermöglicht, wahlweise einen der Flüssigkeitsauslässe 5, 6 mit der Ventilkammer 7 zu verbinden und dabei den jeweils anderen Flüssigkeitsauslass 5, 6 zu verschließen. Hierzu hat das Umschaltventil 10 eine in der Ventilkammer 7 drehbar angeordnete Ventilscheibe 11, die einen wahlweise mit dem einen Flüssigkeitsauslass 5 oder anderen Flüssigkeitsauslass 6 in Überdeckung zu bringenden Durchlass 12 aufweist. Die Ventilscheibe 11 ist zu ihrer Betätigung mit einer koaxialen Verzahnung 13 versehen.

Die Figur 2 verdeutlicht, dass zum Verdrehen der Ventilscheibe 11 eine Zahnstange 14 in die Verzahnung 13 eingreift. Zum Verschieben der Zahnstange 14 entlang einer Geradführung 15 dient ein Kipphebel 16, der um eine Schwenkachse 17 schwenkbar angeordnet ist. Eine Schnappfeder 18 spannt den Kipphebel 16 oder die Zahnstange 14 in der dargestellten Position vor. Drückt man einen Taster 19, dann schwenkt der Kipphebel 16 entgegen dem Uhrzeigersinn. Dadurch wird die Schnappfeder 18 zunächst zusammengedrückt, überwindet in Mittelstellung einen Totpunkt und lässt dann den Kipphebel 16 in die gestrichelte Stellung schnellen, wodurch sich die Zahnstange 14 entsprechend nach rechts verschiebt und die Ventilscheibe 11 sich verdreht. Will man in die alte Stellung zurückschalten, dann drückt man einen Taster 20, der auf den anderen Hebelarm des Kipphebels 16 einwirkt als der Taster 19, wodurch man den Kipphebel 16 im Uhrzeigersinn verschwenkt und er wiederum nach Überwindung des Totpunktes der Schnappfeder 18 von selbst in seine Endstellung gelangt.

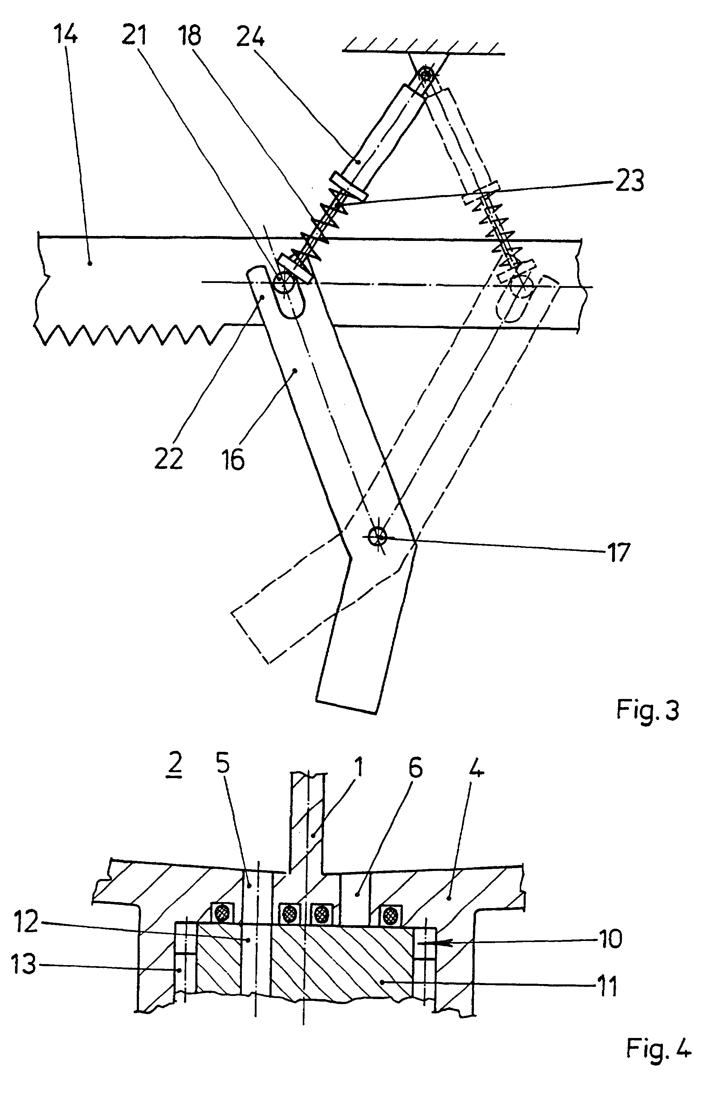

Wie der Schnappeffekt entsteht, lässt sich am raschesten der Figur 3 entnehmen. An der Zahnstange 14 ist beispielsweise ein Bolzen 21 befestigt, über den eine Gabel 22 des Kipphebels 16 greift. Die Schnappfeder 18 drückt mit einer am Bolzen 21 befestigten Kolbenstange 23 gegen diesen Bolzen 21. Bewegt man die Zahnstange 14 nach rechts, dann wird die Kolbenstange 23 entgegen der Wirkung der Schnappfeder 18 in einen Zylinder 24 geschoben und fährt aufgrund der Federspannung wieder aus diesem Zylinder 24 heraus, sobald ein Totpunkt überwunden ist.

Die Figur 4 dient der weiteren Verdeutlichung der Gestaltung des Umschaltventils 10. Zu erkennen ist, dass seine Ventilscheibe 11 von unten her dichtend gegen den Boden 4 des wasserbehälters anliegt. Ihr Durchlass 12 fluchtet mit dem Flüssigkeitsauslass 5, so dass Flüssigkeit aus der Flüssigkeitskammer 2 herauslaufen kann. Gleichzeitig wird der Flüssigkeitsauslass 6 von der Ventilscheibe 11 verschlossen.

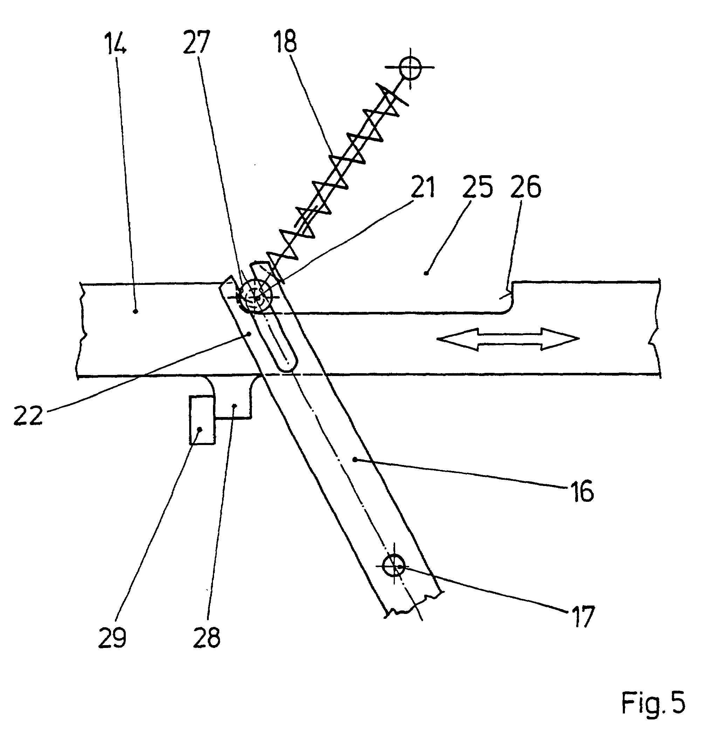

Bei der Ausführungsform nach Figur 5 hat die Zahnstange 14 eine Ausnehmung 25, die von zwei Endflächen 26, 27 begrenzt wird. In der gezeigten Stellung der Schnappfeder 18 liegt der Bolzen 21 gegen die linke Endfläche 27 an, so dass die Zahnstange 14 nach links hin vorgespannt ist und mit einem Anschlagnocken 28 gegen einen Anschlag 29 anliegt. Verschwenkt man den Kipphebel 16 im Uhrzeigersinn um seine Schwenkachse 17, dann bewegt dieser mit seiner Gabel 22 den Bolzen 27 nach rechts, bis die Totpunktstellung der Schnappfeder 18 überwunden ist. Die Schnappfeder 18 bewegt dann den Bolzen 27 gegen die rechte Endfläche 26 und verschiebt anschließend die Zahnstange 14 nach rechts, bis sie gegen einen nicht gezeigten rechten Anschlag gelangt.

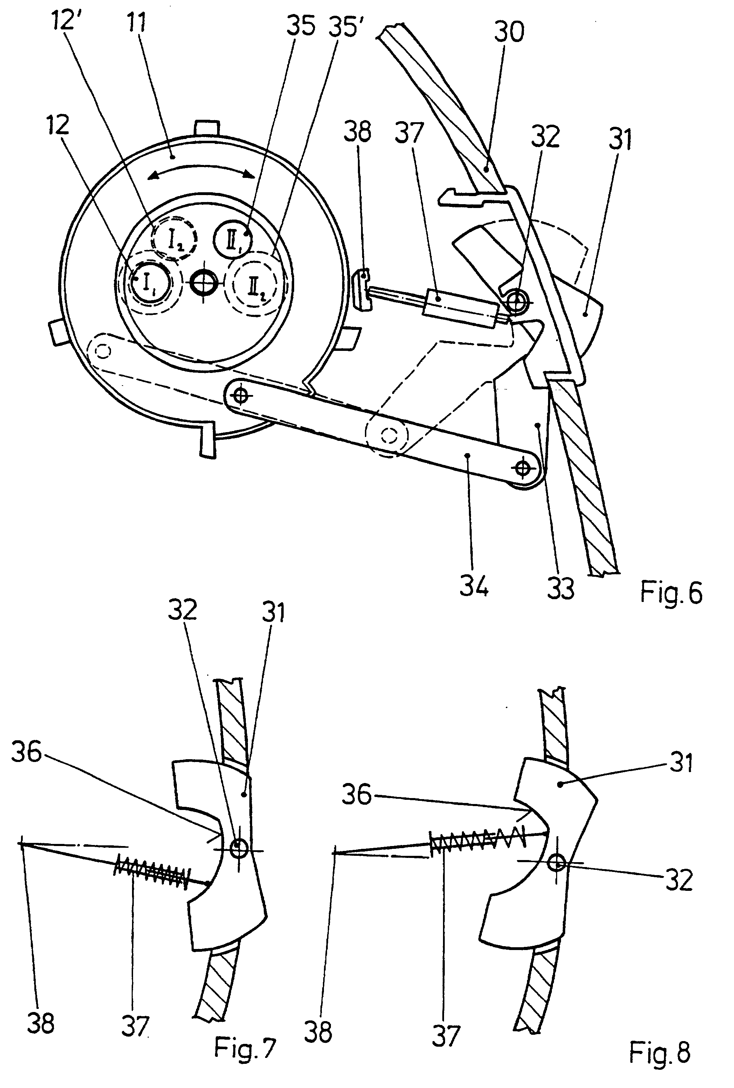

Die Figur 6 zeigt teilweise ein Gehäuse 30 des Flüssigkeitsbehälters, in welchem ein Wippschalter 31 um eine Achse 32 schwenkbar angeordnet ist. Der Wippschalter 31 hat innerhalb des Gehäuses 30 einen starr mit ihm verbundenen Hebelarm 33, an welchem eine Schubstange 34 angelenkt ist. Diese Schubstange 34 ist mit ihrem anderen Ende gelenkig mit der Ventilscheibe 11 verbunden. Diese Ventilscheibe 11 hat bei dieser Ausführungsform zwei Durchlässe 12 und 35. In der dargestellten Position befindet sich beispielsweise der Durchlass 12 in einer solchen Lage, dass aus einer Flüssigkeitskammer 2 Flüssigkeit auszufließen vermag, während der andere Durchlass 35 nicht mit dem in den vorangehenden Figuren gezeigten Flüssigkeitsauslass 6 der anderen Flüssigkeitskammer 3 fluchtet und dieser deshalb versperrt ist. Wird die Ventilscheibe 11 im Uhrzeigersinn verdreht, dann gelangt der Durchlass 35 in eine fluchtende Stellung zum Flüssigkeitsauslass 6, so dass die Flüssigkeitskammer 3 dann auszufließen vermag, während die Flüssigkeitskammer 2 versperrt ist.

Die Drehbewegung der Ventilscheibe 11 kommt dadurch zustande, dass man den Wippschalter 31 um die Achse 32 im Uhrzeigersinn verschwenkt. Dadurch bewegt sich die Schubstange 34 in Figur 6 gesehen nach links und verdreht die Ventilscheibe 11. Die Position der Ventilscheibe 11 soll wiederum bistabil sein. Hierzu ist bei dieser Ausführungsform der Wippschalter 31 bistabil ausgebildet, was die Figuren 7 und 8 verdeutlichen.

wie die Figuren 7 und 8 erkennen lassen, hat der Wippschalter 31 eine Gleitfläche 36, gegen die sich eine Teleskopstange 37 mit Vorspannung abstützt. Die Teleskopstange 37 ist mit ihrem anderen Ende in einer Abstützung 38 schwenkbar gehalten. Sie spannt in Figur 7 den Wippschalter 31 in der dort gezeigten Position vor. Drückt man in Figur 7 gesehen auf den unteren Bereich des Wippschalters 31 und verschwenkt ihn um die Achse 32, dann rutscht die Teleskopstange 37 auf der Gleitfläche 36 zunächst bis in eine mittlere, labile Position und schnappt dann in die in Figur 8 gezeigte gegenüberliegende Position, so dass der Wippschalter 31 von selbst in seine zweite Schaltstellung schnappt.

### Bezugszeichenliste

- 1: Trennwand
- 2: Flüssigkeitskammer
- 3: Flüssigkeitskammer
- 4: Boden
- 5: Flüssigkeitsauslass

- 6: Flüssigkeitsauslass
- 7: Ventilkammer
- 8: Bodenventil
- 9: Schließglied
- 10: Umschaltventil

- 11: Ventilscheibe
- 12: Durchlass
- 13: Verzahnung
- 14: Zahnstange
- 15: Geradführung

- 16: Kipphebel
- 17: Schwenkachse
- 18: Schnappfeder
- 19: Taster
- 20: Taster

- 21: Bolzen
- 22: Gabel
- 23: Kolbenstange
- 24: Zylinder
- 25: Ausnehmung

- 26: Endfläche
- 27: Endfläche
- 28: Anschlagnocken
- 29: Anschlag
- 30: Gehäuse

- 31: Wippschalter
- 32: Achse
- 33: Hebelarm
- 34: Schubstange
- 35: Durchlass

- 36: Gleitfläche
- 37: Teleskopstange
- 38: Abstützung

## Patentansprüche

1. Flüssigkeitsbehälter (1, 2, 3) für eine Munddusche, welcher in seinem Boden (4) ein beim Aufsetzen auf die Munddusche öffnendes Bodenventil (8) hat, **dadurch gekennzeichnet, dass** der Flüssigkeitsbehälter zwei separate Flüssigkeitskammern (2, 3) mit jeweils einem zu dem Bodenventil (8) führenden Flüssigkeitsauslass (5, 6) hat, welcher an einem manuell betätigbaren, wahlweise den einen oder anderen Flüssigkeitsauslass (5, 6) freigebenden Umschaltventil (10) angeschlossen ist.

2. Flüssigkeitsbehälter nach Anspruch 1, **dadurch gekennzeichnet, dass** das Umschaltventil (10) durch eine bistabile Schnappfeder (18) in seine jeweilige Schaltstellung vorgespannt ist.

3. Flüssigkeitsbehälter nach den Ansprüchen 1 oder 2, **dadurch gekennzeichnet, dass** das Bodenventil (8) in einer unter dem Boden (4) des Flüssigkeitsbehälters vorgesehenen Ventilkammer (7) angeordnet ist und dass das Umschaltventil (10) zwischen einem Schließglied (9) des Bodenventils (8) und den Flüssigkeitsauslässen (5, 6) als gegen den Boden (4) des Flüssigkeitsbehälters anliegende, manuell verdrehbare Ventilscheibe (11) ausgebildet ist, welche einen wahlweise mit dem einen oder anderen Flüssigkeitsauslass (5, 6) in Überdeckung zu bringenden Durchlass (12) aufweist.

4. Flüssigkeitsbehälter nach Anspruch 3, **dadurch gekennzeichnet, dass** die Ventilscheibe (11) mit einer koaxialen Verzahnung (13) versehen ist und dass zum Verdrehen der Ventilscheibe (11) eine axial verschiebliche Zahnstange (14) vorgesehen ist.

5. Flüssigkeitsbehälter nach Anspruch 4, **dadurch gekennzeichnet, dass** die Zahnstange (14) durch die Schnappfeder (18) in zwei Endstellungen vorgespannt ist.

6. Flüssigkeitsbehälter nach zumindest einem der Ansprüche 4 und 5, **dadurch gekennzeichnet, dass** zum Betätigen der Zahnstange (14) ein um eine Schwenkachse (17) beweglicher, zweiarmiger Kipphebel (16) vorgesehen ist, welcher mit einem Ende an der Zahnstange (14) angreift und gegen dessen Hebelarme jeweils ein Tastschalter (19, 20) anliegt.

7. Flüssigkeitsbehälter nach Anspruch 6, **dadurch gekennzeichnet, dass** die Zahnstange (14) um ein solches Maß verschieblich mit dem Kipphebel (16) gekoppelt ist, dass beim Umschalten von der einen in die andere Stellung eine Mitnahme der Zahnstange (14) erst nach Überwindung der Totpunktstellung der Schnappfeder (18) erfolgt.

8. Flüssigkeitsbehälter nach Anspruch 7, **dadurch gekennzeichnet, dass** die Schnappfeder (18) sich auf einem Bolzen (21) abstützt, welcher einerseits in einer Gabel (22) eines Hebelarmes des Kipphebels (16) verschieblich geführt, andererseits in einer Ausnehmung (25) der Zahnstange (14) abgestützt ist, und dass der Bolzen (21) zum Verschieben der Zahnstange (14) gegen jeweils eine von zwei Endflächen (26, 27) der Ausnehmung (25) beweglich ist.

9. Flüssigkeitsbehälter nach zumindest einem der Ansprüche 3 bis 8, **dadurch gekennzeichnet, dass** zum Verdrehen der Ventilscheibe (11) an der Ventilscheibe (11) eine Schubstange (34) angelenkt ist, welche mit ihrem anderen Ende mit einem Hebelarm (33) eines Wippschalters (31) Verbindung hat.

10. Flüssigkeitsbehälter nach Anspruch 9, **dadurch gekennzeichnet, dass** die Schnappfeder (18) als Teleskopstange (37) ausgebildet ist und an einer Abstützung (38) des Flüssigkeitsbehälters und einer Gleitfläche (36) des Wippschalters (31) angreift.

## Claims

1. Liquid container (1, 2, 3) for a mouth spray which has a valve (8) in its bottom (4) which opens when it is mounted on the mouth spray, **characterized in that** the liquid container has two separate liquid chambers (2, 3) each with a liquid outlet (5, 6) leading to the bottom valve (8) and connected to a manually operable switching valve (10) releasing one or other of the liquid outlets (5, 6).

2. Liquid container according to Claim 1, **characterized in that** the switching valve (10) is pre-loaded in each switch position by a bistable catch spring (18).

3. Liquid container according to Claim 1 or Claim 2, **characterized in that** the bottom valve (8) is arranged in a valve chamber (7) provided under the bottom (4) of the liquid container and **in that** the switching valve (10) is configured as a manually rotatable valve disk (11) resting against the bottom (4) of the liquid container between a closing element (9) of the bottom valve (8) and the liquid outlets (5, 6) and having a through passageway (12) which can be brought into register with optional one or other of the liquid outlets (5, 6).

4. Liquid container according to Claim 3, **characterized in that** the valve disk (11) is provided with coaxial toothing (13) and **in that** an axially displaceable toothed rack (14) is provided to tum the valve disk (11).

5. Liquid container according to Claim 4, **characterized in that** the rack (14) is pre-loaded in two end positions by the catch spring (18).

6. Liquid container according to at least one of Claims 4 and 5, **characterized in that** a two-armed rocker lever (16), which is movable about a pivot axis (17) and engages the rack (14) with one end, and against each of whose lever arms a push-button (19, 20) presses, is provided for actuation of the rack (14).

7. Liquid container according to Claim 6, **characterized in that** the rack (14) is coupled with the rocker lever (16) displaceably by an amount such that upon switching from one position to the other, the rack (14) is tripped only after the dead point position of the catch spring (18) has been passed.

8. Liquid container according to Claim 7, **characterized in that** the catch spring (18) bears on a pin (21) one end of which is displaceably guided in a fork (22) of one lever arm of the rocker lever (16) and the other end of which is carried in a recess (25) in the rack (14), and **in that** the pin (21) is movable against one or other of two end faces (26, 27) for displacement of the rack (14).

9. Liquid container according to at least one of Claims 3 to 8, **characterized in that** a pushrod (34) for turning the valve disk (11) is linked to the valve disk (11) and is connected by its other end to a lever arm (33) of a rocker switch (31).

10. Liquid container according to Claim 9, **characterized in that** the catch spring (18) is configured as a telescopic rod (37) and engages on a support (38) of the liquid container and a slide surface (36) of the rocker switch (31).

## Revendications

1. Réservoir de liquide (1, 2, 3) pour un hydropulseur, qui possède dans son fond (4) une soupape de fond (8) qui s'ouvre lors de la pose sur l'hydropulseur, **caractérisé en ce que** le réservoir de liquide comprend deux chambres à liquide séparées (2, 3) ayant chacune une sortie de liquide (5, 6) qui mène à la soupape de fond (8) et qui est raccordée à une soupape inverseuse (10) pouvant être actionnée manuellement et qui libère sélectivement l'une ou l'autre sortie de liquide (5, 6).

2. Réservoir de liquide selon la revendication 1, **caractérisé en ce que** la soupape inverseuse (10) est précontrainte dans sa position d'inversion existante par un ressort à action brusque bistable (18).

3. Réservoir de liquide selon les revendications 1 ou 2, **caractérisé en ce que** la soupape de fond (8) est disposée dans une chambre de soupape (7) prévue au-dessous du fond (4) du réservoir de liquide et **en ce que** la soupape inverseuse (10), placée entre un élément de fermeture (9) de la soupape de fond (8) et les sorties de liquide (5, 6), est constituée par un disque de soupape (11) appuyé contre le fond (4) du réservoir de liquide, qu'on peut faire tourner manuellement et qui présente un perçage traversant (12) qui peut être mis sélectivement en coïncidence avec l'une ou l'autre des sorties de liquide (5, 6).

4. Réservoir de liquide selon la revendication 3, **caractérisé en ce que** le disque de soupape (11) est muni d'une denture coaxiale (13) et **en ce qu'**il est prévu une crémaillère (14) pouvant coulisser axialement pour faire tourner le disque de soupape (11).

5. Réservoir de liquide selon la revendication 4, **caractérisé en ce que** la crémaillère (14) est précontrainte dans deux positions extrêmes par le ressort à action brusque (18).

6. Réservoir de liquide selon au moins une des revendications 4 et 5, **caractérisé en ce que**, pour l'actionnement de la crémaillère (14), il est prévu un levier basculant à deux bras (16) qui peut se déplacer autour d'un axe de pivotement (17), qui attaque la crémaillère (14) par une extrémité et contre chacun des bras duquel est appuyé un poussoir (19, 20).

7. Réservoir de liquide selon la revendication 6, **caractérisé en ce que** la crémaillère (14) est accouplée au levier basculant (16) de façon mobile en translation dans une mesure telle que, lors de l'inversion passant de l'une à l'autre des positions, il ne se produit un entraînement de la crémaillère (14) qu'après le franchissement de la position de point mort du ressort à action brusque (18).

8. Réservoir de liquide selon la revendication 7, **caractérisé en ce que** le ressort à action brusque (18) prend appui sur un doigt (21) qui est guidé à coulissement, d'une part dans une fourche (22) d'un bras du levier à bascule (16) et d'autre part, dans un évidement (25) de la crémaillère (14), et **en ce que**, pour faire coulisser la crémaillère (14), le doigt (21) peut venir se placer à chaque fois contre une des deux surfaces extrêmes (26, 27) de l'évidement (25).

9. Réservoir de liquide selon au moins une des revendications 3 à 8, **caractérisé en ce que**, pour faire tourner le disque de soupape (11), est prévue une bielle (34) articulée au disque de soupape (11) et qui est en liaison par son autre extrémité avec un bras de levier (33) d'une touche à bascule.

10. Réservoir de liquide selon la revendication 9, **caractérisé en ce que** le ressort à action brusque (18) est constitué par une tige télescopique (37) et attaque un appui (38) du réservoir de liquide et une surface de glissement (36) de la touche à bascule (31).
